# EUROPÄISCHE PATENTSCHRIFT

(11) **EP 1 445 574 B1**
(45) Veröffentlichungstag und Bekanntmachung des Hinweises auf die Patenterteilung: **18.12.2013**
(21) Anmeldenummer: 03024229.1
(22) Anmeldetag: 22.10.2003
(51) Int. Cl.: G01B 5/016, G01B 7/016

(54) **Tastsystem mit einer Anordnung zur Auswertung von Sendesignalen**
Touch probe system with a device for evaluating the transmission signals
Système palpeur avec un dispositif pour évaluer les signaux d'émission

(30) Priorität: 29.01.2003 DE 10304195
(43) Veröffentlichungstag der Anmeldung: 11.08.2004
(73) Patentinhaber: Dr. Johannes Heidenhain GmbH, 83292 Traunreut (DE)
(72) Erfinder: Gröll, Klaus, 83329 Waging am See (DE); Eisenberger, Christian, 83324 Ruhpolding (DE)

(56) Entgegenhaltungen:
- EP-A- 1 014 582
- WO-A-00/70298
- WO-A-99/41856
- DE-A- 10 132 554
- US-A- 5 862 604
- US-B1- 6 487 785

## Beschreibung

Die Erfindung betrifft ein Tastsystem nach dem Oberbegriff des Patentanspruchs 1.

Hierbei geht es um die Auswertung der Sendesignale (Ausgangssignale) eines Tastsystems, das an einem Messtaster ein aus einer Ruheposition auslenkbares Tastelement aufweist und das während einer Auslenkung des Tastelementes aus seiner Ruheposition heraus ein Schaltsignal erzeugt. Derartige Tastsysteme werden zur Positionsbestimmung von Werkstücken verwendet, die in materialbearbeitenden Maschinen, z.B. Fräsmaschinen, eingespannt sind. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Zur Ermittlung, ob das Tastelement aus seiner Ruheposition heraus ausgelenkt wurde, wird eine geeignete Detektoranordnung verwendet und in Abhängigkeit von den seitens dieser Detektoranordnung erzeugten Signalen, gibt das Tastsystem seine Sendesignale ab, vergleiche DE 101 32 554 A1.

Aus der Patentschrift US 5862604 ist ein Verfahren zur Koordinatenmessung an Werkstücken bekannt, das es erlaubt den genauen Antastzeitpunkt aus dem Verlauf des Tastsignals zu erkennen, auch wenn das Signal beispielsweise vom Werkstoff des zu vermessenden Werkstücks, der Geometrie, insbesondere der Länge, und dem Material des Taststifts, der Antastrichtung und der Antastgeschwindigkeit abhängt.

In der Patentschrift US 6487785 ist eine Schaltung offenbart, die unabhängig von einer Signalübertragung eine Anpassung einer Auslöseschwelle für einen Tastkopf ermöglicht.

Die EP 1014582 betrifft eine Signalübertragungsschaltung zum Übertragen digitaler Signale, wobei dort Referenzsignale erzeugt werden um Schwellwerte für die Festlegung von HI- und LO- Signalen festzulegen.

Bei sogenannten kabellosen Tastsystemen wird das entsprechende Schaltsignal als elektromagnetisches Signal, insbesondere als Infrarotsignal, an eine Empfangseinheit übertragen. In dieser werden die Sendesignale des Tastsystems ausgewertet, um das Auftreten von Schaltsignalen (also eine Auslenkung des Tastelementes) festzustellen. Um hierbei das Schaltsignal (und gegebenenfalls weitere relevante Sendesignale des Tastsystems, wie z. B. ein Batteriesignal) von Störsignalen (verursacht z. B. durch den Infrarot-Anteil gedimmter Neon-Leuchtröhren) unterscheiden zu können, werden die von der Empfangseinheit empfangenen Signale (Empfangssignale) mit einem Referenzsignal verglichen und nur solche Signale weiter verarbeitet, die eine durch das Referenzsignal bestimmte Signalschwelle überschreiten. Ein derartiges Verfahren und eine zugehörige Schaltungsanordnung sind aus der WO 99/41856 A1 bekannt.

Aus der WO 00/70298 ist ein Tastsystem mit kabelloser Signalübertragung bekannt, bei dem ungewollte Einschaltvorgänge eines Tastkopfes, die durch Störstrahlung ausgelöst sein können, unterbunden werden.

Zur Optimierung einer kabellososen Signalübertragung bei Tastsystemen wird in der Offenlegungsschrift DE 10132554 vorgeschlagen, dass der Tastkopf gedreht wird, so dass sich danach der Empfänger im Empfangsbereich des Senders befindet.

Die Unterscheidung zwischen auswertungsrelevanten Sendesignalen des Tastsystems und Störsignalen wird dabei zunehmend dadurch erschwert, dass ein Datenaustausch zwischen dem Tastsystem und der zugehörigen Empfangseinheit über immer größere Entfernungen verlangt wird und hiermit häufig noch eine entsprechende Vergrößerung des Raumwinkels einhergeht, in dem die Sendesignale abgestrahlt werden.

Der Erfindung liegt das Problem zugrunde, eine Anordnung der eingangs genannten Art zu schaffen, die sich durch eine verbesserte Unterscheidung zwischen Sendesignalen des Tastsystems und Störsignalen auszeichnen.

Dieses Problem wird durch die Merkmale des Patentanspruchs 1 gelöst.

Danach wird das Referenzsignal durch Verknüpfung von Nutzsignalen, die insbesondere die Spitzenwerte der (ggf. differenzierten) Empfangssignale umfassen, mit Störsignalen gebildet, die das Sendesignal überlagern und die ebenfalls von der dem Tastsystem zugeordneten Empfangseinheit empfangen werden.

Aufgrund der Bildung des Referenzsignals, welches eine Signalschwelle definiert, anhand derer die Sendesignale des Tastsystems von Störsignalen unterschieden werden können, durch Verknüpfung der Empfangssignale des Tastsystems mit den Störsignalen lässt sich sicherstellen, dass die Signalschwelle einen solchen Wert aufweist, der von den Störsignalen nicht (oder allenfalls in sehr seltenen Einzelfällen) überschritten wird. Hierdurch wird vermieden, dass Störsignale irrtümlich als Sendesignale des Tastsystems identifiziert werden.

Das durch Verknüpfung der Nutzsignale mit den Störsignalen gebildete Referenzsignal liegt vorzugsweise zwischen der Amplitude (bzw. Einhüllenden) der Sendesignale und der Amplitude (bzw. Einhüllenden) der Referenzsignale, wobei die Amplitude der Störsignale kleiner ist als die der Sendesignale.

Die Verknüpfung zwischen den Nutzsignalen und den Störsignalen kann insbesondere additiv bzw. subtraktiv, z.B. durch Mittelwertbildung, erfolgen, indem sämtliche von der Empfangseinheit empfangenen Signale nach einer bestimmten Vorschrift miteinander verknüpft werden. Hierdurch werden sowohl die Sendesignale des Tastsystems als auch die Störsignale einbezogen und berücksichtigt.

Sowohl für die Nutzsignalen als auch aus den Störsignalen kann vor der Verknüpfung vorteilhaft jeweils ein effektiver Wert, z.B. entsprechend einer Einhüllenden des jeweiligen Signals, gebildet werden.

Für die Bildung effektiver Werte der einzelnen Signale sowie zur Verknüpfung der Signale können einerseits analoge Schaltungen, wie z.B. Kondensatorschaltungen bzw. ein Spannungsteiler verwendet werden, wobei die Nutzsignale vorzugsweise mittels der zur Bildung des effektiven Wertes verwendeten Kondensatorschaltung aus den Empfangssignalen abgeleitet werden. Andererseits kann hierzu auch eine digitale Schaltung, insbesondere unter Verwendung eines programmierbaren Logikbausteines oder eines Mikroprozessors, dienen.

Im Ergebnis erfolgt (z.B. mittels zweier Kondensatorschaltungen), anhand der unterschiedlichen typischen Frequenzen der (höherfrequenten) Sendesignale einerseits und der (niederfrequenteren) Störsignale andererseits, eine Auftrennung der differenzierten Empfangssignale in Nutzsignale, die im wesentlichen die differenzierten Sendesignale umfassen, und in die vergleichsweise niederfrequenteren Störsignale. Dabei können gleichzeitig ein effektiver Wert der Nutzsignale (entsprechend den Spitzen der differenzierten Empfangssignale) und der Störsignale (entsprechend einer Einhüllenden der Störsignale) gebildet werden.

In einer bevorzugten Weiterbildung der Erfindung werden die Empfangssignale (in der Empfangseinheit) vor dem Vergleich mit dem Referenzsignal (und auch vor der Bildung des Referenzsignals) in einem Differenzierer nach der Zeit differenziert.

Durch das Differenzieren der Empfangssignale werden niederfrequente Störungen eliminiert, die z. B. in mittels Neon-Leuchtröhren beleuchteten Räumen auftreten, und hierdurch die Unempfindlichkeit des Auswerteverfahrens gegenüber Störungen erheblich verbessert. Darüber hinaus ermöglicht das Differenzieren der Empfangssignale die Möglichkeit zur Unterscheidung der Sendesignale von Störsignalen anhand der Lage der Flanken der Sendesignale. Dies wird weiter unten noch näher erläutert werden.

Die Sendesignale des Tastsystems, insbesondere die Schaltsignale, werden vorzugsweise durch im Wesentlichen rechteckförmige Signalpulse gebildet, wobei das Differenzieren der Empfangssignale mit dem Ziel der Ermittlung der Signalflanken der Signalpulse durchgeführt wird und wobei sowohl die Signalflanken mit positiver Steigung als auch die Signalflanken mit negativer Steigung nachfolgend ausgewertet werden.

In einer bevorzugten Ausführungsform der Erfindung werden die Sendesignale durch eine Folge von Signalpaketen gebildet, wobei jedes Signalpaket ein Startsignal und ein Stoppsignal aufweist und wobei bei jeder Auslenkung des Tastelementes zwischen dem Start- und dem Stoppsignal ein Schaltsignal auftritt.

Durch Bestimmung der Lage der steigenden und fallenden Signalflanken der Start- und Stoppsignale, die vorgegebene, charakteristische Abstände aufweisen, kann das regelmäßige Auftreten von Start- und Stoppsignalen festgestellt werden. Dies erlaubt eine zuverlässige Unterscheidung der von Start- und Stoppsignalen begrenzten Signalpakete von Störsignalen, die keine vergleichbare Regelmäßigkeit aufweisen. Indem das bei jeder Auslenkung des Tastelementes abzugebende Schaltsignal wiederum an definierter Position zwischen einem Start- und einem Stoppsignal ausgesandt wird, lassen sich auch die Schaltsignale jeweils eindeutig anhand der Lage ihrer Flanken bezüglich der Start- und Stoppsignale identifizieren. Gleiches gilt für Batteriesignale oder sonstige relevante Sendesignale des Tastsystems. Dies ermöglicht eine weiter verbesserte Unterscheidung auswertungsrelevanter Signale des Tastsystems von störenden Hintergrundsignalen.

Die elektromagnetischen Sendesignale (Infrarotsignale) des Tastsystems werden in der zugeordneten Empfangseinheit vor dem Differenzieren mittels eines optoelektronischen Elementes, z. B. in Form einer Fotodiode, in elektrische Signale (Spannungssignale) umgesetzt, so dass die Signalverarbeitung und -auswertung in der Empfangseinheit anhand der elektrischen Signale erfolgt.

Das Referenzsignal, welches insbesondere einer Referenzspannung entspricht und welches die Signalschwellen definiert, anhand derer Sendesignale des Tastsystems identifizierbar sind, wird vorzugsweise aus solchen Nutzsignalen gebildet, die aus den in elektrische Signale umgewandelten und differenzierten Empfangssignalen abgeleitet sind.

Zur Auswertung der Signale, die nach dem Vergleich mit dem Referenzsignal als auswertungsrelevant angesehen werden, kann ein schneller Halbleiterspeicher in Form eines Schieberegisters verwendet werden, der das Signal an einer Vielzahl Abtaststellen auswertet, um die Lage der Flanken der das Ausgangssignal bildenden Signalpulse zu ermitteln. Die Lage der Abtaststellen wird dabei durch ein periodisches Abtastsignal definiert, dessen Frequenz um ein Vielfaches größer ist als die Signalrate der Pulse des Sendesignals. Hierdurch kann die Lage der Flanken der auswertungsrelevanten Signale mit entsprechender Genauigkeit festgestellt werden.

Alternativ zu der Verwendung eines Schieberegisters können auch ein programmierbarer Logikbaustein oder ein Mikroprozessor verwendet werden, um im Rahmen einer digitalen Schaltung die Signalflanken zu ermitteln.

Somit kann bei dem erfindungsgemäßen Verfahren aus dem regelmäßigen Auftreten von Start- und Stoppsignalen, die anhand der charakteristischen Lage ihrer Signalflanken zueinander identifizierbar sind, auf die Bereitschaft des Tastsystems geschlossen werden, wenn dieses im Bereitschaftszustand regelmäßig entsprechende Signalpakete aussendet. Wenn zudem die bei jeder Auslenkung des Tastelementes erzeugten Schaltsignale jeweils in definiertem Abstand zwischen einem Start- und einem Stoppsignal ausgesandt werden, dann sind auch diese Signale anhand der charakteristischen Lage ihrer Flanken innerhalb eines Signalpaketes zuverlässig identifizierbar. Gleiches gilt für eventuell auszusendende Batteriesignale, mit denen beispielsweise auf das Erfordernis hingewiesen wird, die Batterie des Tastsystems zu erneuern. Die zuverlässige Unterscheidung der Sendesignale des Tastsystems einerseits und Störsignale andererseits wird dabei durch die Bildung eines Referenzsignales erreicht, welches die Amplitude sowohl der Sendesignale als auch der Störsignale berücksichtigt.

Eine besondere Zuverlässigkeit des Verfahrens wird erreicht, wenn die Signalflanken mit positiver und negativer Steigung jeweils in einer separaten Schaltung bearbeitet und ausgewertet werden.

Eine Anordnung zur Auswertung der Sendesignale eines Tastsystems, die insbesondere zur Durchführung des Verfahrens geeignet ist, ist durch die Merkmale des Patentanspruchs 1 charakterisiert.

Vorteilhafte Weiterbildungen der Anordnung sind in den von Patentanspruch 1 abhängigen Ansprüchen angegeben. Hinsichtlich der Vorteile dieser Anordnung wird auf die entsprechenden Ausführungen zu dem Verfahren hingewiesen.

Weitere Merkmale und Vorteile der Erfindung werden bei der nachfolgenden Erläuterung von Ausführungsbeispielen anhand der Figuren deutlich werden.

Es zeigen:
- Fig. 1: eine schematische Darstellung eines Tastsystems mit einer zugeordneten Empfangseinheit zur Auswertung der von dem Tastsystem erzeugten Sendesignale;
- Fig. 2: ein Blockschaltbild des Tastsystems aus Figur 1;
- Figuren 3a und 3b: eine schematische Darstellung der von dem Tastsystem erzeugten Sendesignale;
- Fig. 4: ein Blockschaltbild der Empfangseinheit aus Figur 1;
- Fig. 4a: eine schematische Darstellung der Wirkungsweise eines Differenzierelementes der in Figur 4 dargestellten Schaltungsanordnung;
- Fig. 5: einen Arbeitsschritt bei der Auswertung der Sendesignale des Tastsystems in der Empfangseinheit;
- Figuren 6a und 6b: einen weiteren Arbeitsschritt bei der Auswertung der Sendesignale des Tastsystems in der Empfangseinheit;
- Fig. 7: eine digitale Schaltung als Alternative zur analogen Schaltungsanordnung aus Figur 4.

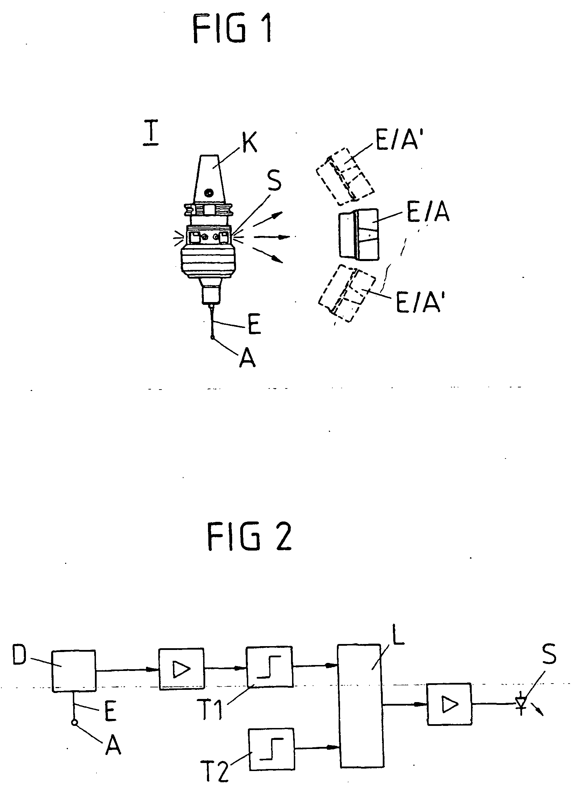

In Figur 1 ist ein Tastsystem T dargestellt, das zur Bestimmung der Position und Kontur eines in einer Werkzeugmaschine, beispielsweise einer Fräsmaschine, eingespannten Werkstückes dient und hierzu einen Messtaster umfasst. Der Messtaster ist mittels eines Konus K in eine Spindel der entsprechenden Werkzeugmaschine einsetzbar.

An seinem dem Konus K gegenüber liegenden Ende weist das Tastsystem T ein Tastelement E in Form eines Taststiftes mit einer Antastkugel A auf, das in alle Richtungen beweglich am Gehäuse des Tastsystems gelagert ist. Die Ruheposition des Tastelementes E liegt in der Regel auf der Symmetrieachse des Tastsystems T, wie in Figur 1 gezeigt. Bei einem Kontakt der Antastkugel A des Tastelementes E mit einem in der entsprechenden Werkzeugmaschine eingespannten Werkstück wird das Tastelement E aus seiner Ruheposition heraus ausgelenkt. Diese Auslenkung wird durch eine Detektoranordnung des Tastsystems erfasst.

Das Tastsystem weist hierzu gemäß Figur 2 eine dem Tastelement E zugeordnete Detektoranordnung D auf, mit der eine Auslenkung des Tastelementes E beispielsweise durch einen optischen Sender (in Form einer LED) und einem zugeordneten Sensor (in Form eines Differentialfotoelementes) erfassbar ist. Für weitere Einzelheiten hinsichtlich des möglichen Aufbaus des Tastsystems T wird beispielhaft auf die DE 199 29 557 A1 verwiesen. ,

Die von der Detektoranordnung D in Abhängigkeit von der Auslenkung des Tastelementes E erzeugte Ausgangsspannung wird verstärkt und einem Trigger T1 zugeführt. Der Trigger T1 enthält als weiteres Eingangssignal eine Referenzspannung, die beispielsweise von einem programmierbaren Logikbaustein L zur Verfügung gestellt wird. Die Referenzspannung definiert die Schaltschwelle, oberhalb derer die Ausgangsspannung des der Detektoranordnung D nachgeschalteten Verstärkers als Hinweis auf eine Auslenkung des Tastelementes E gilt.

Beim Auftreten einer Spannung oberhalb der Schaltschwelle wird mittels des Logikbausteines L über einen hierfür vorgesehenen IR-Sender S von dem Tastsystem ein entsprechendes Infrarot-Signal (Schaltsignal) an eine zugeordnete Empfangs- und Auswerteeinheit E/A gesandt, vergleiche Figur 1. Ein zweiter, dem Logikbaustein L des Tastsystems zugeordneter Trigger T2 dient der Überwachung der Batteriespannung und sorgt für die Abgabe eines Batteriesignals an die zugeordnete Empfangs- und Auswerteeinheit E/A, wenn im Tastsystem ein Batteriewechsel erforderlich ist.

Figur 1 zeigt unterschiedliche mögliche Anordnungen der Empfangs- und Auswerteeinheit E/A bezüglich des Messtasters des Tastsystems T, insbesondere bezüglich dessen IR-Sender S. Die möglichen Abstrahlwinkel des durch gleichmäßig am Umfang des Gehäuses des Tastsystems T angeordnete LEDs gebildeten Senders S betragen gemäß Figur 1 wahlweise 0°, +30° oder -30°.

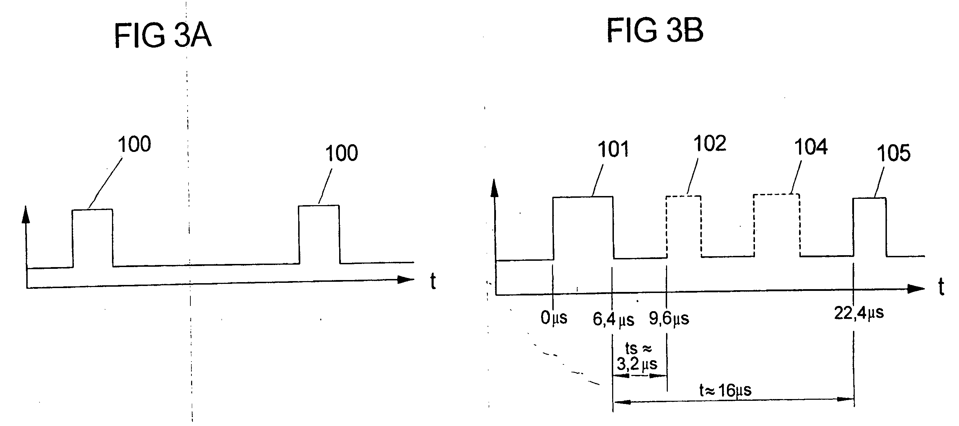

Gemäß Figur 3a werden von dem Tastsystem T, wenn es sich in Betriebsbereitschaft befindet, regelmäßig in einem zeitlichen Abstand von etwa 3 ms Datenpakete 100 an die zugeordnete Empfangseinheit abgesandt. Diese durch IR-Strahlung gebildeten Datenpakete bestehen gemäß Figur 3b aus einer Mehrzahl rechteckförmiger Signalpulse, nämlich einem Startbit 101 und einem Stoppbit 105, zwischen denen noch ein Schaltsignal 102 und ein Batteriesignal 104 angeordnet sein können. Mit anderen Worten ausgedrückt werden im Bereitschaftszustand des Tastsystems regelmäßig Datenpakete 100 ausgesandt, die jeweils ein Startbit 101 und ein Stoppbit 105 aufweisen, wobei zwischen dem Ende des Startbit 101 und dem Beginn des jeweiligen Stoppbit 105 eine definierte Zeitspanne von 16 µs liegt. Wurde durch das Tastsystem eine Auslenkung des Tastelementes festgestellt, so tritt zwischen dem Startbit 101 und dem Stoppbit 105 in einem definierten zeitlichen Abstand von der fallenden Flanke des Startbit (3,2 µs) ein Schaltsignal 102 auf. Darüber hinaus kann zwischen dem Startbit 101 und dem Stoppbit 105 ein Batteriesignal 104 vorgesehen sein, um einen notwendigen Wechsel der Batterie des Tastsystems anzuzeigen.

Das vorstehend anhand der Figuren 1 bis 3b dargestellte Tastsystem mit einem auslenkbaren Tastelement und mit einer zugeordneten Empfangseinheit ist aus dem Stand der Technik bekannt, vergleiche etwa DE 199 29 557 A1.

Nachfolgend wird der Aufbau der Empfangseinheit sowie die Auswertung der Sendesignale des Tastsystems in der Empfangseinheit näher beschrieben, durch die sich die vorliegende Erfindung gegenüber dem Stand der Technik auszeichnet.

Die dem Tastsystem zugeordnete Empfangseinheit umfasst vorliegend als Empfänger eine Fotodiode 1 mit einem nachgeordneten Verstärker 10 sowie ein der Fotodiode 1 nachgeordnetes Differenzierelement 2 mit einem weiteren nachgeordneten Verstärker 20. Dem Differenzierelement 2 und Verstärker 20 sind zwei identische Auswerteschaltungen 3, 3' nachgeordnet, wobei der zweiten Auswerteschaltung 3' noch ein Invertierer 25 vorgeschaltet ist. Jede der beiden Auswerteschaltungen 3, 3' dient jeweils zum Vergleich des mittels des Differenzierers 2 differenzierten Signals mit einem Referenzsignal in einem Trigger 4 und zur Auswertung solcher Signale, die einen durch das Referenzsignal (in Form einer Referenzspannung) definierten Schwellwert überschreiten in einem Schieberegister 5.

Zur Bildung einer Referenzspannung ausgehend von der Ausgangsspannung des Differenzierers 2 mit nachgeschaltetem Verstärker 20 weist jede der beiden Schaltungen 3, 3' in einem ersten Zweig ein elektrisches Bauelement 30, z.B. in Form einer Diode auf, das nur dann für elektrische Signale durchlässig ist, wenn die eingangsseitige Spannung größer ist als die ausgangsseitige, an einem nachgeschalteten Kondensator 31 abfallende Spannung, der sich wiederum über einen Widerstand 32 entladen kann. Die elektrischen Bauelemente der Kondensatorschaltung 30, 31, 32 sind dabei, insbesondere im Hinblick auf die Abklingzeit des Kondensators, die beispielsweise 15 ms betragen kann, so gewählt, dass die Kondensatorschaltung 30, 31, 32 ihre maximale Wirksamkeit bei Signalen hoher Frequenz erreicht (die zu einem nachgeordneten Verstärker 33 durchgelassen werden). Hierbei handelt es sich vor allem um die Sendesignale des Messtasters. Die Pegel dieser differenzierten Sendesignale sind in der Regel deutlich höher als die Pegel der differenzierten Störsignale.

In einem zweiten Zweig weist die jeweilige Auswerteschaltung 3, 3' ein weiteres elektrisches Bauelement 35 (in Form einer Diode) auf, welches nur dann für elektrische Signale durchlässig ist, wenn die eingangsseitige Spannung größer ist als die ausgangsseitige, an einem nachgeschalteten Kondensator 36 abfallende Spannung, der sich wiederum über einen Widerstand 37 entladen kann. Zwischen jenes elektrische Bauelement 35 und den dem Bauelement 35 nachgeschalteten Kondensator 36 ist ein elektrischer Widerstand 35a geschaltet. Dieser Widerstand 35a ist so gewählt, dass der Kondensator 36 (Abklingzeit z.B. 21 ms) nicht durch die vom Tastsystem erzeugten Datenpakete 100 (vergleiche Figuren 3a und 3b) sondern nur durch solche Störsignale aufladbar ist, die sich im Vergleich zu den Datenpaketen über einen längeren Zeitraum erstrecken bzw. eine kleinere Frequenz aufweisen; d.h. der dem Kondensator 36 vorgeschaltete elektrische Widerstand 35a verursacht eine Verzögerung in der Reaktionszeit der Auswerteschaltung, so dass die sehr kurzen Signalpakete 100, die von dem Tastsystem ausgesandt werden, keine nennenswerte Aufladung des entsprechenden Kondensators 36 bewirken. Der Kondensator wird daher im Wesentlichen nur durch die vergleichsweise niederfrequenteren Störsignale aufgeladen, die beispielsweise durch den Infrarot-Anteil von Leuchtröhren gebildet werden.

Mittels der beiden Kondensatorschaltungen 30, 31, 32 und 35, 35a, 36, 37 erfolgt also eine Auftrennung der differenzierten Empfangssignale in Nutzsignale, die im wesentlichen die differenzierten Sendesignale umfassen, und in die vergleichsweise niederfrequenteren Störsignale. Dabei werden gleichzeitig ein effektiver Wert der Nutzsignale (entsprechend den Spitzen der differenzierten Empfangssignale) und der Störsignale (entsprechend einer Einhüllenden der Störsignale) gebildet, wie nachfolgend noch näher erläutert werden wird.

Den beiden Kondensatorschaltungen 30, 31, 32 und 35, 35a, 36, 37 der jeweiligen Auswerteschaltung 3, 3' ist jeweils ein Verstärker 33 bzw. 38 nachgeschaltet, wobei der erstgenannte Verstärker den Verstärkungsfaktor Eins und der zweitgenannte Verstärker einen Verstärkungsfaktor größer Eins aufweist.

Über die Verstärker 33, 38 sind die beiden Zweige der jeweiligen Auswerteschaltung 3, 3' mit einem Spannungsteiler 39 verbunden, der durch zwei Widerstände gebildet wird. Die von diesem Spannungsteiler abgegriffene Spannung wird dem einen Eingang des jeweiligen Triggers 4 zugeführt, an dessen anderem Eingang jeweils das Ausgangssignal des Differenzierers 2 liegt. Dem Trigger 4 der jeweiligen Auswerteschaltung 3, 3' ist ein Schieberegister 5 nachgeschaltet.

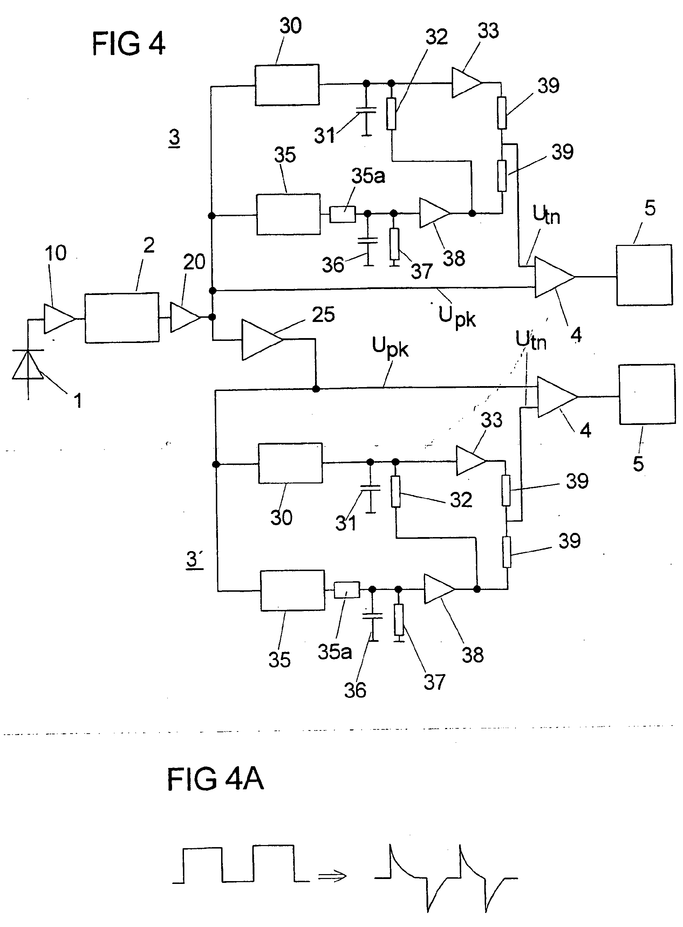

Mittels der anhand Figur 4 erläuterten Schaltungsanordnung erfolgt die Auswertung der Sendesignale des anhand der Figuren 1 bis 3b beschriebenen Tastsystems wie folgt:

Mittels der Fotodiode 3 und dem nachgeordneten Verstärker 10 wird aus den IR-Signalen des Tastsystems sowie den ebenfalls vorhandenen infraroten Störsignalen, die gemeinsam die Empfangssignale der Empfangseinheit E/A bilden, ein elektrisches Signal, nämliche ein Spannungssignal, erzeugt, welches anschließend in dem Differenzierer 2 differenziert wird. Hierdurch werden niederfrequente Störungen eliminiert, die z. B. von Leuchtröhren stammen können. Beim Differenzieren der zunächst im Wesentlichen rechteckförmigen Spannungssignale werden Spannungsspitzen (Spannungsimpulse) an den steigenden und fallenden Flanken der einzelnen Rechtecksignale erzeugt, vergleiche Figur 4a.

Dabei bewirken steigende Flanken einen positiven Spannungsimpuls und fallende Flanken des Sendesignals einen negativen Spannungsimpuls des differenzierten Signales. Die positiven und negativen Spannungsimpulse 3, 3' werden in den beiden dem Differenzierer 2 nachgeordneten Auswerteschaltungen 3, 3' separat ausgewertet, wobei die fallenden Flanken bzw. die entsprechenden Spannungsimpulse des differenzierten Signales der Auswerteschaltung 3' mit dem vorgeschalteten Inventierer 25 zugeordnet sind.

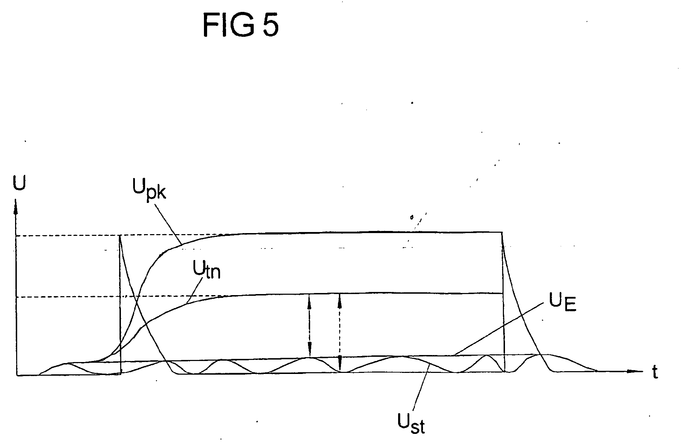

Figur 5 zeigt, wie durch Mittelung der Spitzenwerte Uₚₖ des differenzierten Empfangssignals mit einem effektiven Wert (Einhüllende U_{E}) der Störsignale Uₛₜ ein effektiver Spannungswert Uₜₙ gebildet wird, der als Referenzspannung die Triggerschwelle des Triggers 4 der jeweiligen Auswerteschaltung 3, 3' definiert. Dabei sind in Figur 5 beispielhaft die der steigenden Flanke eines Startbits sowie der steigenden Flanke eines Stoppbits entsprechenden differenzierten Signale dargestellt.

Der Trigger 4 der jeweiligen Auswerteschaltung 3, 3' erkennt diejenigen Signale als Sendesignale, deren Amplitude die durch die Referenzspannung Uₜₙ definierte Triggerschwelle übersteigt. Dadurch, dass die Referenzspannung Uₜₙ durch Verknüpfung der Spitzenwerte der differenzierten Empfangssignale mit einer Einhüllenden der Störsignale gebildet wird, steigt mit zunehmender Amplitude der Störsignale die Triggerschwelle an. Hierdurch wird die Gefahr von Fehlauslösungen des jeweiligen Triggers 4 aufgrund von Störsignalen weitgehend beseitigt. Denn die Triggerschwelle liegt ja oberhalb der Einhüllenden der Störsignale.

Würde demgegenüber, wie aus dem Stand der Technik bekannt, die Triggerschwelle durch Verknüpfung (Mittelwertbildung) der Spitzenwerte der Empfangssignale mit dem Nullpotential gebildet, so wäre die Triggerschwelle unabhängig von den Störsignalen und es bestünde eine erhöhte Gefahr, dass Störsignale zu einer Fehlauslösung der Trigger 4 führen.

Durch die erfindungsgemäß vorgesehene Verknüpfung der Spitzenwerte der (differenzierten) Empfangssignale mit einem effektiven Wert der Störsignale zur Bildung der Triggerschwelle können insbesondere die Störeffekte hochfrequenter Störsignale beseitigt werden. Dies ergänzt die Eliminierung niederfrequenter Störsignale durch das oben beschriebene Differenzieren der Empfangssignale vor deren weiterer Bearbeitung und Auswertung.

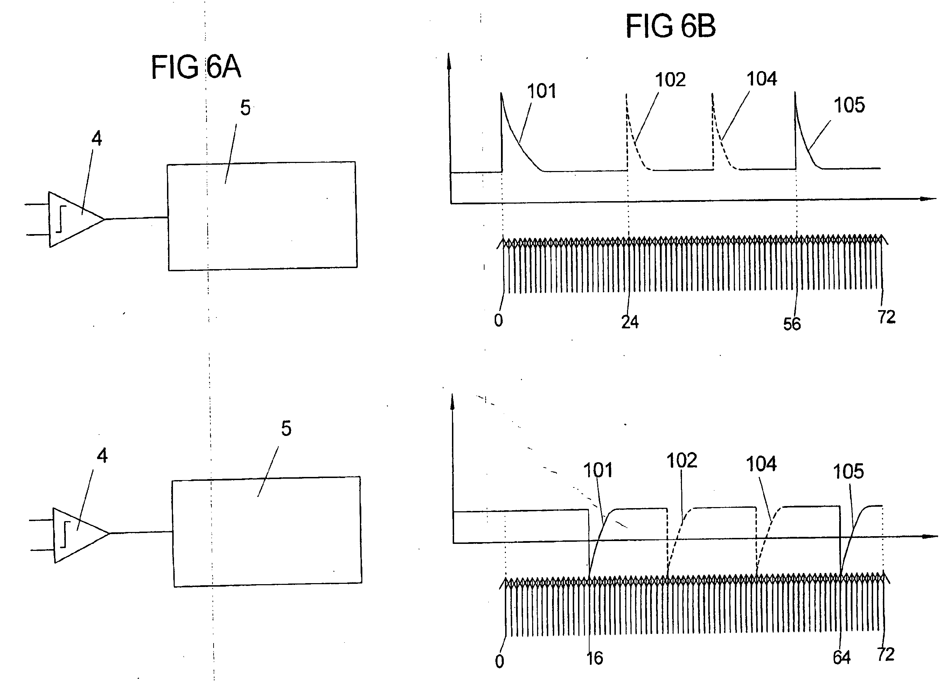

Diejenigen Signale, die vom Trigger 4 der jeweiligen Auswerteschaltung 3, 3' als Flanken der Sendesignale des Tastsystems erkannt worden sind, werden nachfolgend mittels eines Schieberegisters 5 ausgewertet. Dabei ist jeder der beiden Auswerteschaltungen 3, 3' ein eigenes Schieberegister 5 zugeordnet, so dass die von ansteigenden Flanken herrührenden Spannungsimpulse und die von fallenden Flanken herrührenden Spannungsimpulse separat ausgewertet werden. Hierbei geht es darum, festzustellen, ob zwischen einem Startbit und einem Stoppbit eines vom Tastsystem ausgesandten Datenpaketes ein Schaltsignal und/oder ein Batteriesignal auftritt. Weitere Einzelheiten hierzu können den Figuren 6a und 6b entnommen werden.

Figur 6a zeigt schematisch noch einmal die beiden Schieberegister 5 aus Figur 4, die je einem Trigger 4 nachgeordnet und mit einer (nicht im Einzelnen dargestellten) Auswertelogik verknüpft sind.

Figur 6b zeigt schematisch die positiven (oben) und negativen (unten) Spannungsimpulse eines differenzierten Datenpaketes, welche aus den Sendesignalen des Tastsystems gewonnen wurde. Nach dem Differenzieren werden die ansteigenden und fallenden Flanken des Datenpaketes jeweils durch positive oder negative Spannungsimpulse repräsentiert, wie anhand Figur 4a dargestellt.

Zum Einlesen von Daten aus den auszuwertenden Datenpaketen in das jeweilige Schieberegister 5 erfolgt ein sogenanntes achtfaches "Oversampling". D.h., die Abtastfrequenz (1/0,4 µs⁻¹ = 2.500 kHz) des Schieberegisters 5 beträgt das Achtfache der Taktfrequenz (Bit-Rate von 1/3,2 µs⁻¹ = 312,5 kHz) des Sendesignales. Dementsprechend werden für jedes auszuwertende Datenpaket 100, das maximal vier Signalpulse (Startbit, Stoppbit sowie gegebenenfalls ein Schaltsignal und ein Batteriesignal) aufweist, Daten an zweiundsiebzig Abtaststellen eingelesen, vergleiche Figur 6b. Der zeitliche Abstand (0,4 µs) zwischen zwei aufeinander folgenden Einlesevorgängen in das Schieberegister beträgt somit ein Zweiundsiebzigstel der Dauer eines Signalpaketes 100. Hierdurch wird eine entsprechende hohe Genauigkeit bei der Auswertung der Datenpakete erzielt.

Wie anhand der Figuren 6a und 6b erkennbar, dient das eine Schieberegister 5 zur Bestimmung der Lage der steigenden Flanken und das andere Schieberegister 5 zur Bestimmung der Lage der fallenden Flanken der Datenpakete. Diese werden in dem differenzierten Ausgangssignal jeweils durch positive bzw. negative Signalpulse repräsentiert.

Durch Auswertung der Datenpakete mittels der beiden Schieberegister 5 wird zum einen überprüft, ob in dem Schieberegister 5, welches die Lage der ansteigenden Flanken der Datenpakete analysiert, regelmäßig Impulse in einem Abstand von sechsundfünfzig Abtaststellen (entsprechend dem zeitlichen Abstand der steigenden Flanken von Start- und Stoppsignal) auftreten. In entsprechender Weise wird mittels des anderen Schieberegisters 5 analysiert, ob dort regelmäßig Impulse in einem Abstand von achtundvierzig Abtaststellen (entsprechend dem zeitlichen Abstand der fallenden Flanken von Start- und Stoppsignal) auftreten - und ob der erste der beiden entsprechenden Impulse (fallende Flanke des Startsignals) in einem Abstand von sechzehn Abtaststellen von Signalbeginn (steigende Flanke des Startsignals) auftritt. Ist dies der Fall, so befindet sich das Tastsystem in Bereitschaft; d. h., es werden regelmäßig Datenpakete ausgesandt, die zumindest ein Startbit und ein Stoppbit enthalten.

Entscheidend ist hierbei, dass auf die Bereitschaft des Tastsystems aus der Lage der Flanken von Signalen geschlossen wird. Es ist unerheblich, ob zusätzlich zu den erwarteten Signal pulsen in einem Abstand von sechsundfünfzig bzw. achtundvierzig Abtaststellen noch einzelne weitere Signalpulse vorhanden sind, die beispielsweise auf Störungen zurückzuführen sein könnten. Es kommt alleine darauf an, dass in einem Abstand von sechsundfünfzig bzw. achtundvierzig Abtaststellen jeweils regelmäßig Signalpulse (entsprechend einer ansteigenden bzw. fallenden Flanke) detektiert werden. Dabei wird für jeden einzelnen Signalpuls jeweils eine Abweichung von plus minus einer Abtaststelle (Berücksichtigung des Jitter) zugelassen.

Indem die Flanken eines eventuellen Schaltsignals 102 bzw. eines eventuellen Batteriesignals 104 jeweils einen definierten Abstand von den entsprechenden Flanken der Start- und Stoppsignale 101, 105 aufweisen, lassen sich dann auch die Existenz eines Schaltsignals 102 bzw. eines Batteriesignals 104 unmittelbar aus der Lage detektierter Pulse des differenzierten Signals ableiten. So ergibt etwa eine Zusammenschau der Figuren 3b und 6b, dass die steigende Flanke eines Schaltsignals vierundzwanzig Abtaststellen von der steigenden Flanke des Startbits des entsprechenden Datenpaketes entfernt ist. Eine entsprechend feste Beziehung gilt hinsichtlich der Lage der fallenden Flanke eines eventuellen Schaltbits bezüglich der fallenden Flanke des Startbits usw.

Somit lässt sich allein durch Auswertung der Lage der Flanken der von dem Tastsystem erzeugten Sendesignale in Form von Datenpaketen feststellen, ob sich das Tastsystem in Bereitschaft befindet sowie ob ein Schaltsignal (entsprechend einer Auslenkung des Tastelementes) und/oder ein Batteriesignal (entsprechend einem erforderlichen Batteriewechsel) vorliegt.

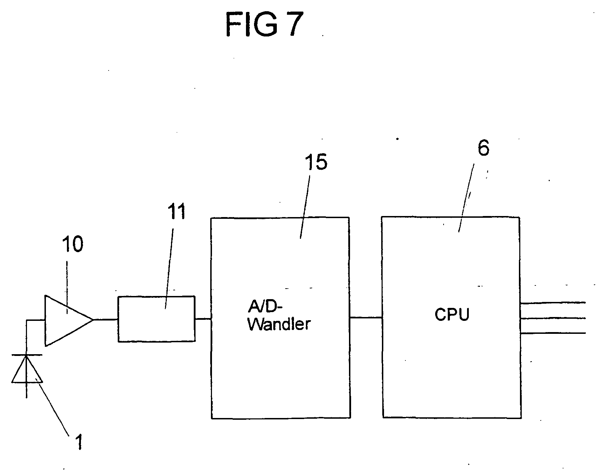

Figur 7 zeigt im Unterschied zu der analogen Schaltungsanordnung aus Figur 4 eine digitale Ausführung einer Anordnung zur Auswertung der Sendesignale eines Tastsystems, die Bestandteil einer entsprechenden Empfangseinheit sein kann. Diese Anordnung umfasst eine Fotodiode 1 mit nachgeschaltetem Verstärker 10, Filter 11 und Analog-/Digitalwandler 15. Dem Analog-/Digitaiwandler 15 ist wiederum ein Mikroprozessor oder programmierbarer Logikbaustein 6 nachgeordnet, der nach Wandlung des von der Fotodiode 1 und dem Verstärker 10 erzeugten Spannungssignals in digitale Signale mittels des Analog-/Digitalwandlers 15 die gesamte Aufarbeitung und Auswertung der Signale übernimmt. Sämtliche vorstehend anhand der Figuren 4 bis 6 beschriebenen Verfahrensschritte, insbesondere das Differenzieren der Empfangssignale, die Unterscheidung der Sendesignale des Tastsystems von Störsignalen (durch Vergleich der Empfangssignale mit einem Referenzwert, gebildet aus den differenzierten Empfangssignalen und einem Effektivwert der Störsignale) sowie die abschließende Bestimmung der Lage der Flanken der einzelnen Impulse des Sendesignals erfolgt hierbei mittels des Mikroprozessors bzw. programmierbaren Logikbausteines 6.

## Patentansprüche

1. Tastsystem (T) mit einer Anordnung zur Auswertung von Empfangssignalen, wobei das Tastsystem einen Messtaster und eine Empfangseinheit (E/A) umfasst, wobei der Messtaster ein aus einer Ruheposition auslenkbares Tastelement (E) aufweist und in Abhängigkeit von der Auslenkung des Tastelementes (E) elektromagnetische Sendesignale erzeugt und wobei die Empfangseinheit (E/A) Mittel zum Empfang von Empfangssignalen, die aus den Sendesignalen und Störsignalen (Uₛₜ) bestehen und Mittel (1, 10) zur Umwandlung der elektromagnetischen Signale in elektrische Signale sowie Mittel zum Vergleich der Empfangssignale mit einem Referenzsignal (Uₜₙ) aufweist,
**dadurch gekennzeichnet,**
**dass** Mittel (39) vorgesehen sind, um zur Bildung des Referenzsignals (Uₜₙ) aus den Empfangssignalen generierte Nutzsignale mit den Störsignalen (Uₛₜ) zu verknüpfen, wobei die Mittel (39) zur additiven und/oder subtraktiven Verknüpfung der Nutzsignale mit den Störsignalen (Uₛₜ) ausgebildet und vorgesehen sind, wobei wobei die Mittel (39) ausgebildet sind um einen effektiven. Wert der Nutzsignale, der durch Spitzenwerte der Empfangssignale gebildet ist, mit einer Einhüllenden (U_{E}) der Störsignale (Uₛₜ) als effektiven. Wert der Störsignale (Uₛₜ), zu verknüpfen.

2. Tastsystem nach Anspruch 1, **dadurch gekennzeichnet, dass** den Mitteln (4) zum Vergleich der Empfangssignale mit einem Referenzsignal (Uₜₙ) ein Differenzierer (2) vorgeschaltet ist, mit dem die Empfangssignale nach der Zeit differenzierbar sind.

3. Tastsystem nach Anspruch 2, **dadurch gekennzeichnet, dass** der Differenzierer (2) den Mitteln (39) zur Verknüpfung des Empfangssignals mit den Störsignalen (Uₛₜ) vorgeschaltet ist, so dass die differenzierten Empfangssignale zur Verknüpfung verwendet werden.

4. Tastsystem nach einem der Ansprüche 1 bis 3, **gekennzeichnet durch** eine Empfangseinheit (E/A), die zum Empfang von Infrarotsignalen des Messtasters ausgebildet ist, und die Mittel (1, 10) zur Umwandlung der elektromagnetischen Signale in elektrische Signale in Form eines optoelektronischen Bauelementes, aufweist.

5. Tastsystem nach Anspruch 4, **dadurch gekennzeichnet, dass** den Mitteln (1, 10) zur Umwandlung der elektromagnetischen Signale in elektrische Signale eine analoge Schaltung (3, 3') zur Bearbeitung und Auswertung der Empfangssignale nachgeschaltet ist.

6. Tastsystem nach Anspruch 4, **dadurch gekennzeichnet, dass** den Mitteln (1, 10) zur Umwandlung der elektromagnetischen Signale in elektrische Signale eine digitale Schaltung (6), insbesondere ein programmierbarer Logikbaustein oder Mikroprozessor, zur Bearbeitung und Auswertung der Empfangssignale nachgeschaltet ist.

7. Tastsystem nach einem der Ansprüche 1 bis 6, **dadurch gekennzeichnet, dass** Mittel (5) zur Bestimmung der Lage der Flanken der Empfangssignale vorgesehen sind, die den Mitteln (4) zum Vergleich der Empfangssignale mit dem Referenzsignal (Uₜₙ) nachgeordnet sind.

8. Tastsystem nach Anspruch 7, **dadurch gekennzeichnet, dass** die Mittel (5) zur Bestimmung der Lage der Flanken ein Schieberegister, einen Mikroprozessor oder einen programmierbaren Logikbaustein umfassen.

## Claims

1. Touch probe system (T) with an arrangement for evaluating received signals, the touch probe system comprising a measurement probe and a receiving unit (E/A), the measuring probe having a sensing element (E), which can be deflected from a rest position, and generating electromagnetic transmitted signals as a function of the deflection of the sensing element (E), and the receiving unit (E/A) having means for receiving received signals, which consists of the transmitted signals and interference signals (Uₛₜ), and means (1, 10) for converting the electromagnetic signals into electric signals and means for comparing the received signals with a reference signal (Uₜₙ),
**characterized in that**
means (39) are provided in order to combine with the interference signals (Uₛₜ) useful signals generated so as to form the reference signal (Uₜₙ) from the received signals, the means (39) being designed and provided for additive and/or substractive combination of the useful signals with the interference signals (Uₛₜ), the means (39) being designed to combine a root mean square value of the useful signals, which is formed by peak values of the received signals, with an envelope (U_{E}) of the interference signals (Uₛₜ) as root mean square value of the interference signals (Uₛₜ).

2. Touch probe system according to Claim 1, **characterized in that** a differentiator (2) which can be used to differentiate the received signals with respect to time is connected upstream of the means (4) for comparing the received signals with a reference signal (Uₜₙ).

3. Touch probe system according to Claim 2, **characterized in that** the differentiator (2) is connected upstream of the means (39) for combining the received signal with the interference signals (Uₛₜ) such that the differentiated received signals are used for the combination.

4. Touch probe system according to one of Claims 1 to 3, **characterized by** a receiving unit (E/A) which is designed to receive infrared signals of the measuring probe and has means (1, 10) in the form of an optoelectronic component for converting the electromagnetic signals into electric signals.

5. Touch probe system according to Claim 4, **characterized in that** an analogue circuit (3, 3') for processing and evaluating the received signals is connected downstream of the means (1, 10) for converting the electromagnetic signals into electric signals.

6. Touch probe system according to Claim 4, **characterized in that** a digital circuit (6), in particular a programmable logic module or microprocessor, for processing and evaluating the received signals is connected downstream of the means (1, 10) for converting the electromagnetic signals into electric signals.

7. Touch probe system according to one of Claims 1 to 6, **characterized in that** means (5) for determining the position of the edges of the received signals are provided which are arranged downstream of the means (4) for comparing the received signals with the reference signal (Uₜₙ).

8. Touch probe system according to Claim 7, **characterized in that** the means (5) for determining the position of the edges comprise a shift register, a microprocessor or a programmable logic module.

## Revendications

1. Système d'échantillonnage (T) doté d'un ensemble d'évaluation de signaux de réception, le système d'échantillonnage comportant :
un échantillonneur de mesure et une unité de réception (E/A),
l'échantillonneur de mesure présentant un élément d'échantillonnage (E) apte à quitter une position de repos et formant des signaux électromagnétiques d'émission qui sont fonction du déplacement de l'élément d'échantillonnage (E),
l'unité de réception (E/A) présentant des moyens de réception de signaux de réception constitués des signaux d'émission et de signaux parasites (Uₛₜ) et des moyens (1, 10) de conversion des signaux électromagnétiques en signaux électriques ainsi que des moyens de comparaison des signaux de réception avec un signal de référence (Uₜₙ),
**caractérisé en ce que**
le système présente des moyens (39) qui associent les signaux utiles produits à partir des signaux de réception aux signaux parasites (Uₛₜ) pour former le signal de référence (Uₜₙ),
**en ce que** les moyens (39) sont configurés et prévus pour associer par addition et/ou par soustraction les signaux utiles aux signaux parasites (Uₛₜ) et
**en ce que** les moyens (39) sont configurés pour associer une valeur effective des signaux utiles formée par les valeurs de pointe des signaux de réception à une enveloppante (U_{E}) des signaux parasites (Uₛₜ) en tant que valeur effective des signaux parasites (Uₛₜ).

2. Système d'échantillonnage selon la revendication 1, **caractérisé en ce qu'**un différentiateur (2) par lequel la différentielle des signaux de réception par rapport au temps peut être formée est prévu en amont des moyens (4) de comparaison des signaux de réception avec un signal de référence (Uₜₙ).

3. Système d'échantillonnage selon la revendication 2, **caractérisé en ce que** le différentiateur (2) est prévu en amont des moyens (39) de comparaison des signaux de réception avec les signaux parasites (Uₛₜ), de telle sorte que les différentielles de signaux de réception sont utilisées pour l'association.

4. Système d'échantillonnage selon l'une des revendications 1 à 3, **caractérisé par** une unité de réception (E/A) configurée pour recevoir des signaux infrarouges de l'échantillonneur de mesure et en ce que les moyens (1, 10) de conversion des signaux électromagnétiques en signaux électriques présente la forme d'un composant optoélectronique.

5. Système d'échantillonnage selon la revendication 4, **caractérisé en ce qu'**un circuit analogique (3, 3') est prévu en aval des moyens (1, 10) de conversion des signaux électromagnétiques en signaux électriques pour traiter et évaluer les signaux de réception.

6. Système d'échantillonnage selon la revendication 4, **caractérisé en ce qu'**un circuit numérique (6), notamment un module logique programmable ou un microprocesseur, est prévu en aval des moyens (1, 10) de conversion des signaux électromagnétiques en signaux électriques pour traiter et évaluer les signaux de réception.

7. Système d'échantillonnage selon l'une des revendications 1 à 6, **caractérisé en ce que** des moyens (5) de détermination de la position des flancs des signaux de réception sont prévus en aval des moyens (4) de comparaison des signaux de réception avec le signal de référence (Uₜₙ).

8. Système d'échantillonnage selon la revendication 7, **caractérisé en ce que** les moyens (5) de détermination de la position des flancs comprennent un registre à décalage, un microprocesseur ou un module logique programmable.
